## Europäisches Patentamt

## European Patent Office

## Office européen des brevets

(19)

(11) Veröffentlichungsnummer : **0 024 708**
**B1**

(12) **EUROPÄISCHE PATENTSCHRIFT**

(45) Veröffentlichungstag der Patentschrift :
**30.03.83**

(51) Int. Cl.³ : **H 04 Q 11/04**, H 04 L 11/00

(21) Anmeldenummer : **80105012.1**

(22) Anmeldetag : **22.08.80**

(54) **Zeitlagenvielfach für ein Zeitmultiplexsystem zur Durchkopplung digitaler, insbesondere deltamodulierter, Nachrichtensignale.**

(30) Priorität : **24.08.79 DE 2934379**

(43) Veröffentlichungstag der Anmeldung :
**11.03.81 Patentblatt 81/10**

(45) Bekanntmachung des Hinweises auf die Patenterteilung : **30.03.83 Patentblatt 83/13**

(84) Benannte Vertragsstaaten :
**CH DE FR GB IT LI NL SE**

(56) Entgegenhaltungen :
**DE A 2 558 599**
**DE A 2 605 908**
**DE A 2 616 038**
**DE A 2 814 415**
**FR A 2 265 227**

(73) Patentinhaber : **SIEMENS AKTIENGESELLSCHAFT**
**Berlin und München Wittelsbacherplatz 2**
**D-8000 München 2 (DE)**

(72) Erfinder : **Binz, Reiner, Dipl.-Ing.**
**Rosenstrasse 5**
**D-8021 Hohenschäftlarn (DE)**
Erfinder : **Pointner, Norbert, Dipl-Ing.**
**Hubertusstrasse 22**
**D-8034 Germering (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 024 708 B1

Zeitlagenvielfach für ein Zeitmultiplexsystem zur Durchkopplung digitaler, insbesondere deltamodulierter, Nachrichtensignale

Die Erfindung betrifft ein Zeitlagenvielfach der im Gattungsbegriff des Anspruches 1 beschriebenen Art.

Einrichtung zur Vermittlung digitaler Zeitmultiplexsignale besitzen außer sogenannten Raumvielfach-Koppelanordnungen zur wahlweisen Verbindung ankommender und abgehender Leitungen auch sogenannte Zeitlagenvielfache, das sind Einrichtungen, mittels derer Nachrichtensignale, die auf einer Zubringer-Multiplexleitung einen vorgegebenen Zeitkanal innerhalb des dem Zeitmultiplexsystem zugrunde liegenden Pulsrahmens einnehmen, in eine hiervon abweichende Zeitlage innerhalb des Pulsrahmens auf einer Abnehmer-Multiplexleitung « versetzt » werden. Derartige Einrichtungen umfassen einen im folgenden als Sprachspeicher bezeichneten Pufferspeicher, in welchen die digitalen Nachrichtensignale eines kompletten Pulsrahmens der Zubringer-Multiplexleitung (vorzugsweise in zyklischer Reihenfolge) eingelesen werden und aus welchem sie mit einer der angegebenen zeitlichen « Versetzung » entsprechenden abweichenden Reihenfolge, die dann ihrer zeitlichen Verschachtelung innerhalb des Pulsrahmens auf der Abnehmer-Multiplexleitung entspricht, wieder ausgelesen werden. Die Reihenfolge des Auslesens wird durch eine im folgenden als Steuerspeicher bezeichnete Einrichtung gesteuert. In diesem Steuerspeicher sind unter Adressen, welche die Zeitlage eines Nachrichtensignals auf der Abnehmer-Multiplexleitung bezeichnen, diejenigen Adressen des Sprachspeichers eingeschrieben, welche die Zeitlage desselben Nachrichtensignals innerhalb des Pulsrahmens auf der Zubringer-Multiplexleitung bezeichnen oder umgekehrt.

Der Steuerspeicher wird mittels einer im folgenden als Zeitlagenzähler bezeichneten Zähleinrichtung zyklisch angesteuert und erzeugt dabei durch entsprechende Adressierung des Sprachspeichers die Reihenfolge, mit welcher die in diesem enthaltenen Nachrichtensignale an die Abnehmer-Multiplexleitung ausgelesen werden.

Die Einspeicherung der Sprachspeicheradressen in den Steuerspeicher erfolgt durch eine übergeordnete Steuereinrichtung nach Maßgabe einer entsprechenden Wegesuche oder -bestimmung. Die Funktion des Steuerspeichers ist somit vergleichbar mit dem nach Maßgabe einer Wegesuche oder -bestimmung erfolgenden Erregung und dem anschließenden « Halten » eines mechanischen Koppelpunktes in einem räumlichen Koppelfeld. Ebenso wie ein solcher Koppelpunkt während der Dauer der betreffenden Verbindung « gehalten » wird, wird bei einem Zeitlagenvielfach der Speicherinhalt einer Speicherzelle des Steuerspeichers, d. h. die unter einer Adresse des Steuerspeichers eingeschriebene Sprachspeicheradresse und damit die der durchgekoppelten Verbindung entsprechende Zuordnung von ankommendem Zeitkanal und abgehendem Zeitkanal gehalten. Der Steuerspeicher wird deshalb häufig auch als « Haltespeicher » bezeichnet.

Die von der übergeordneten Steuereinrichtung ermittelten Steuer- und Sprachspeicheradressen, die einer durchzukoppelnden Verbindung entsprechen, die also letztlich die Zeitlage eines Nachrichtensignals auf der Zubringer-Multiplexleitung einerseits und auf der Abnehmer-Multiplexleitung andererseits angeben, werden in Adressenregister eingegeben, die Teil eines Einstellbefehlsregisters sind. Mit Hilfe einer geeigneten Ablaufsteuerung werden die Sprachspeicheradressen aus diesem Adressenregister unter den zutreffenden Steuerspeicheradressen in den Steuerspeicher eingeschrieben.

Falls in einem Nachrichtenvermittlungs- oder Übertragungssystem Nachrichtensignale übertragen werden sollen, für welche die Kanalkapazität eines einfachen Nachrichtenkanals nicht ausreicht, wird üblicherweise eine genügende Anzahl von Nachrichtenkanälen zusammengefaßt, die gemeinsam das (breitbandige) Nachrichtensignal übertragen. Analog zu den Verhältnissen in einem räumlichen Koppelfeld, in welchem bei einer solchen breitbandigen Nachrichtenverbindung eine entsprechende Vielzahl von Koppelpunkten angesteuert und gehalten werden muß, müssen im vorliegenden Fall eines Zeitlagenvielfachs entsprechend viele Sprachspeicher- und Steuerspeicheradressen einander zugeordnet werden.

Um die übergeordnete Steuereinrichtung von der Belastung zu befreien, eine der Zahl der gemeinsam einen breitbandigen Nachrichtenkanal bildenden Einzelkanäle entsprechende Anzahl von Vermittlungsvorgängen durchführen zu müssen, ist in der DE-A-2 558 599 angegeben, bei der Durchschaltung von PCM-Wörtern mit unterschiedlicher Bitfolgefrequenz die Identität nur jeweils eines ankommenden und abgehenden Zeitkanals von der übergeordneten Steuereinrichtung bestimmen zu lassen und die Adressen der übrigen die Breitkanalverbindung bildenden Einzelkanäle dezentral eigenständig zu ermitteln. Hierzu dient ein Festwertspeicher, in welchem die Adressen der gemäß vorgegebenen Verschachtelungsplänen zusammengehörenden Teilkanäle eingeschrieben sind. Dieser Festwertspeicher beinhaltet die vollständigen Adressen aller Kanäle und benötigt eine entsprechend hohe Speicherkapazität.

Eine Weiterbildung dieser bekannten Schaltungsanordnung ist in der DE-A-28 14 415 beschrieben. Bei dieser Weiterbildung werden die zusammengehörenden Adressen von Zeitkanälen, die gemeinsam einen Nachrichtenkanal höherer Bitrate bilden, mittels eines Festwertspeichers eigenständig abgeleitet, der für die Kombination der einzelnen unterschiedlichen Bitraten kennzeichnende Kodewörter enthält, welche über geeignete Dekodiermittel zur Erzeugung von nach vorgegebenen Verschachtelungsplänen einander zugeordneten Primärkanaladressen auf den Steuerspeicher einwirken.

In der DE-A-26 05 908 und der DE-A-26 16 038 sind Verfahren und Vorrichtungen zum Adressieren von Steuerspeichern angegeben, die ebenfalls den Zweck verfolgen, Mehrkanalverbindungen der beschriebenen Art durch eigenständige Adressenerzeugung zu vereinfachen.

Der Erfindung liegt die Aufgabe zugrunde, eine solche eigenständige Adressenerzeugung mit geringerem Aufwand zu ermöglichen als dies beim Stand der Technik der Fall ist.

Diese Aufgabe wird durch ein Zeitlagenvielfach mit den Merkmalen des Anspruches 1 gelöst.

Erfindungsgemäß wird also der zur zyklischen Adressierung des Steuerspeichers ohnehin vorhandene Zeitlagenzähler als Bestandteil eines Adressengenerators zur selbsttätigen Erzeugung der nicht im Adressenregister stehenden Adresse bzw. Adressenteile mit ausgenutzt.

Die Erfindung macht sich die Tatsache zunutze, daß infolge der zeitlichen Äquidistanz der einen Zeitkanal höherer Bitrate bildenden « Teilkanäle » nur bestimmte...

Binärstellen der die Kanal- (und damit die Speicher-) Adressen wiedergebenden Binärzahlen, die in den jeweiligen Adressenregistern gespeichert sind, von der Adressenänderung betroffen sind : In einem Pulsrahmen, in welchem Nachrichtensignale in beispielsweise 1 024 Zeitkanälen ineinander verschachtelt sind, werden die Ordnungszahlen der einzelnen Zeitkanäle, d. h. die Kanaladressen durch eine 10-stellige Binärzahl bezeichnet. Soll nun ein Zeitkanal höherer Bitrate aus beispielsweise zwei äquidistanten Zeitkanälen eines solchen Pulsrahmens zusammengesetzt werden, so hat die Differenz zwischen den Ordnungszahlen dieser beiden Zeitkanäle den Wert 512. Dies bedeutet, daß die Adressen dieser beiden Zeitkanäle in allen Binärstellen außer derjenigen mit dem höchsten Stellenwert miteinander übereinstimmen. Falls ein Zeitkanal höherer Bitrate aus vier äquidistanten Zeitkanälen zusammengesetzt werden soll, hat die genannte Differenz den Wert 256. Das bedeutet, daß die betreffenden Adressen in allen Binärstellen außer den beiden Binärstellen mit dem höchsten Stellenwert miteinander übereinstimmen. Entsprechend gilt für die Adressen von acht innerhalb der Pulsrahmen äquidistant angeordneten Zeitkanälen, die zusammen einen Nachrichtenkanal höherer Bitrate bilden sollen, daß sie sich lediglich in den drei Binärstellen mit dem höchsten Stellenwert voneinander unterscheiden. Für das Einspeichern kann der Steuerspeicher in der Weise adressiert werden, daß ein Zeitlagenvergleicher vorgesehen ist, der eine der Zahl der Adressenbits der Steuerspeicheradressen entsprechende Zahl von Vergleicherelementen umfaßt und mittels dessen die Koinzidenz zwischen dem die anzusteuernde Steuerspeicheradresse wiedergebenden Speicherzustand des Adressenregisters und dem aktuellen Zählstand des erwähnten Zeitlagenzählers ermittelt wird. Dieser Zeitlagenvergleicher liefert im Koinzidenzfall einen Impuls an die Ablaufsteuerung, die ihrerseits in einem geeigneten Zeitpunkt während des Taktzyklus einen Schreibimpuls für den Steuerspeicher abgibt. Zur Erzeugung der nicht im Adressenregister stehenden äquidistanten Steuerspeicheradressen bei der Durchkopplung eines aus Teilkanälen zusammengesetzten Zeitkanals höherer Bitrate ist gemäß einer Weiterbildung der Erfindung vorgesehen, daß die Vergleicherelemente, die den von der äquidistanten Adressenänderung betroffenen Binärstellen der Steuerspeicheradressen zugeordnet sind, durch die betreffenden Ausgänge der die oben erwähnte Kennung beinhaltenden Speichereinrichtung gewissermaßen unwirksam geschaltet werden. Dies kann beispielsweise durch ODER-Glieder geschehen, die die genannten Vergleicherelemente überbrücken. Dies hat zur Folge, daß jedesmal Koinzidenz simuliert (und damit die Abgabe eines Schreibimpulses bewirkt) wird, wenn der Zeitzähler Zählzustände erreicht, die in allen außer den unwirksam geschalteten Binärstellen mit denen des Adressenregisters übereinstimmen, und in den unwirksam geschalteten Binärstellen des Adressenregisters hingegen entweder eine logische « eins » oder eine logische « null » haben, was bedeutet, daß der Steuerspeicher unter äquidistanten Adressen zur Einspeicherung aktiviert wird.

Die Sprachspeicheradressen sollen als Daten in den Steuerspeicher eingespeichert werden. Die Erzeugung der unter äquidistanten Steuerspeicheradressen einzuschreibenden Sprachspeicheradressen, die ebenfalls gleichen Kanalabstand haben sollen, erfolgt gemäß einer anderen Weiterbildung der Erfindung dadurch, daß diejenigen Ausgänge des die betreffende Adresse beinhaltenden Adressenregisters, die den von der äquidistanten Adressenänderung betroffenen Binärstellen zugeordnet sind, mit jeweils einem ersten Eingang je einer Umschalteeinrichtung verbunden sind, daß die zweiten Eingänge dieser Umschalteeinrichtungen mit den denselben Binärstellen entsprechenden Ausgängen des Zeitlagenzählers verbunden sind, und daß die Umschalteeinrichtungen unter dem Einfluß der genannten Kennung derart umsteuerbar sind, daß an den von den Ausgängen der Umschalteeinrichtungen gebildeten betreffenden Adressenausgangsleitungen alternativ die Ausgangssignale des jeweiligen Adressenregisters oder die Ausgangssignale der entsprechenden Zählstufen des Zeitlagenzählers als einzuspeichernde Daten anstehen.

Falls also eine der Adressenausgangsleitungen durch die zugeordnete Umschalteeinrichtung auf die entsprechende Zählstufe des Zeitlagenzählers umgeschaltet ist, erscheinen an dieser Adressenausgangsleitung nacheinander eine logische « null » und eine logische « eins », was wieder äquidistanten Adressen entspricht.

Auch die Erzeugung der Steuerspeicheradressen kann statt durch den oben beschriebenen Zeitlagenvergleich (mit Simulierung von Koinzidenzen) in der zuletzt beschriebenen Weise durch die Beeinflussung entsprechender Umschalteinrichtungen erfolgen, wobei die auf diese Weise erzeugten Steuerspeicheradressen den Steuerspeicher über einen Adressenbus ansteuern.

Im folgenden sei die Erfindung anhand der Zeichnungen näher erläutert:

Figur 1 zeigt in schematischer Darstellung ein Zeitlagenvielfach zur Durchkopplung von Leitungen, auf denen Nachrichtensignale unterschiedlicher Bitrate übertragen werden,

Figur 2 zeigt das Prinzipschaltbild des Zeitlagenvielfaches,

Figur 3 veranschaulicht die zeitliche Lage der digitalen Zeichenelemente auf den einzelnen an das Zeitlagenvielfach angeschlossenen Leitungen sowie ihre zeitliche Verschachtelung auf einer Multiplexleitung,

Figur 4 zeigt das Prinzipschaltbild zur Ansteuerung des Steuerspeichers gemäß einer ersten Varianten,

Figur 5 zeigt das Prinzipschaltbild eines bei der Schaltung gemäß Fig. 4 verwendeten Zeitlagenvergleichers,

Figur 6 zeigt ein Prinzipschaltbild zur Erzeugung der in den Steuerspeicher einzuschreibenden Sprachspeicheradressen,

Figur 7 zeigt ein Prinzipschaltbild zur Ansteuerung des Steuerspeichers gemäß einer zweiten Varianten.

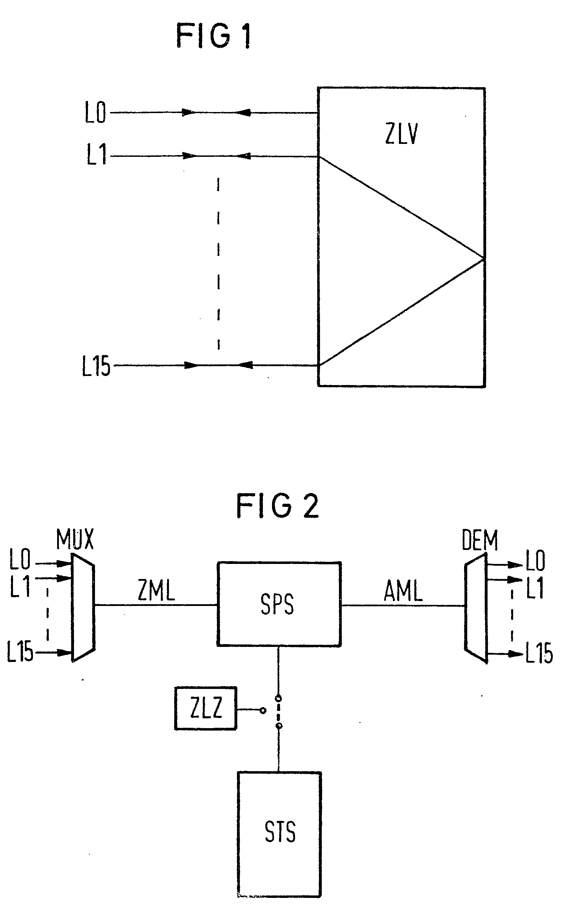

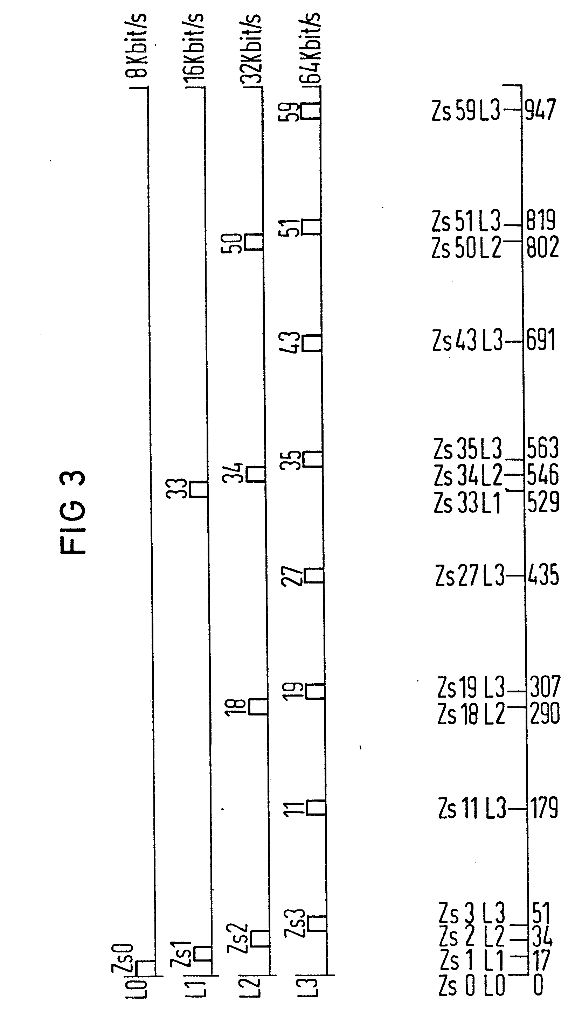

In Fig. 1 ist ein Zeitlagenvielfach ZLV dargestellt, an welches Leitungen L0 bis L15 angeschlossen sind. Das Zeitlagenvielfach ZLV dient zur Durchkopplung der auf den doppeltgerichteten Leitungen L0 bis L15 anstehenden digitalen Nachrichtensignale, die beispielsweise die in Fig. 3 oberer Teil angedeuteten Zeitlagen haben: So steht beispielsweise auf der Leitung L0 ein digitales Nachrichtensignal mit einer Bitrate von 8 Kbit/s, auf der Leitung L1 ein Nachrichtensignal mit der Bitrate 16 Kbit/s, auf der Leitung L3 ein Nachrichtensignal mit der Bitrate 32 Kbit/s und auf der Leitung L3 ein Nachrichtensignal mit der Bitrate 64 Kbit/s an.

In Fig. 2 sind Einzelheiten des Zeitlagenvielfachs ZLV dargestellt. Die ankommenden Leitungen L0 bis L15 sind mit einem Multiplexer MUX verbunden, der die auf diesen Leitungen ankommenden Nachrichtensignale zeitlich derart verschachtelt, daß sie auf der angeschlossenen Zubringer-Multiplexleitung ZML die in Fig. 3 unten angedeutete Zeitlage einnehmen. Die Zubringer-Multiplexleitung führt zu einem Sprachspeicher SPS, in den die Nachrichtensignale eines Pulsrahmens, der im dargestellten Beispiel 1 024 separate Zeitlagen oder Zeitschlitze umfaßt, vorzugsweise zyklisch eingelesen werden.

Die zeitliche Reihenfolge, mit der die Nachrichtensignale aus dem Sprachspeicher SPS an eine Abnehmer-Multiplexleitung AML ausgespeichert werden, d. h. die den eigentlichen Vermittlungsvorgang des Zeitlagenvielfaches ZLV darstellende zeitliche Versetzung der einzelnen Zeitkanäle, steht unter dem Steuereinfluß eines Steuerspeichers STS, der durch einen Zeitlagenzähler ZLZ zyklisch ansteuerbar ist. In diesem Steuerspeicher STS sind unter Adressen, die für die Ordnungszahl eines Zeitkanals auf der Abnehmer-Multiplexleitung ZML kennzeichnend sind, Sprachspeicheradressen eingetragen, die für die Zeitlage der betreffenden Zeitkanäle auf der Zubringer-Multiplexleitung AML kennzeichnend sind, oder umgekehrt.

Die in den Steuerspeicher STS einzuspeichernden Daten (z. B. Sprachspeicheradressen) werden von einer (nicht dargestellten) übergeordneten Steuereinrichtung bezogen und stellen das Ergebnis einer Wegesuche oder -bestimmung dar. Die auf der Abnehmer-Multiplexleitung AML anstehenden Signale werden durch einen Demultiplexer DEM auf die abgehenden Leitungen L0 bis L15 verteilt.

Zur (zeitlichen) Vermittlung der z. B. auf den Leitungen L1, L2 und L3 ankommenden Nachrichtensignale höherer Bitrate, die sich aus einer Mehrzahl von Einzel-Zeitkanälen einer Grundbitrate zusammensetzen, muß in den Steuerspeicher STS eine entsprechende Vielzahl von Adressen-Zuordnungen eingetragen werden. Um eine entsprechend häufige Inanspruchnahme der übergeordneten Steuereinrichtung zu vermeiden, sollen die entsprechenden Steuerspeicher- und Sprachspeicheradressen selbsttätig erzeugt werden.

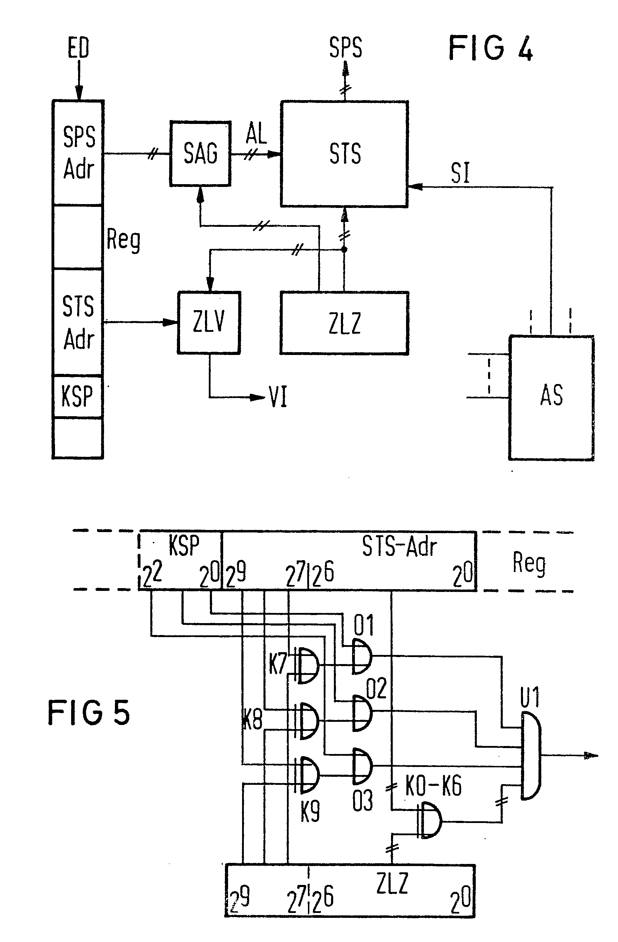

Fig. 4 zeigt das Prinzipschaltbild einer ersten Varianten zur selbsttätigen Erzeugung der zusammengehörenden Steuerspeicheradressen einer im folgenden auch als Mehrkanal- oder Breitbandverbindung bezeichneten Nachrichtenverbindung höherer Bitrate. Es ist ein Register Reg vorgesehen, in welches die einer Verbindung entsprechenden Steuerspeicher- und Sprachspeicheradressen von der übergeordneten Steuereinrichtung als Einstelldaten ED eingegeben werden. Die entsprechenden Registerbereiche sind mit STS-Adr bzw. SPS-Adr bezeichnet. Außerdem besitzt das Register Reg einen mit KSP bezeichneten Speicherbereich, in den eine Kennung eingegeben wird, die angibt, ob es sich bei der durchzukoppelnden Verbindung um eine Einkanal oder um eine Mehrkanalverbindung handelt und aus wievielen Einzelkanälen letztere sich gegebenenfalls zusammensetzt. Die Ausgänge des Registerbereiches STS-Adr stehen mit einem Zeitlagenvergleicher ZLV in Verbindung, in welchem der entsprechende Registereintrag mit dem Zählstand des Zeitlagenzählers ZLZ verglichen und im Koinzidenzfall ein Vergleichsimpuls VI an eine Ablaufsteuerung AS abgegeben wird, die in einem geeigneten Zeitpunkt des jeweiligen Speicherzyklus einen Schreibimpuls SI an den Steuerspeicher STS liefert.

Fig. 5 zeigt das Prinzipschaltbild des Zeitlagenvergleichers ZLV. Es besteht aus Koinzidenz-Gliedern K0 bis K9, ODER-Gliedern O1 bis O3 und

einem UND-Glied U1. Die Koinzidenzglieder K7 bis K9 verknüpfen diejenigen Ausgänge des Registerbereiches STS-Adr und des Zeitlagenzählers ZLZ miteinander, die den von einer eventuellen Adressenänderung betroffenen Binärstellen zugeordnet sind. Die Ausgänge dieser Koinzidenz-Glieder K7 bis K9 stehen mit ersten Eingängen der ODER-Glieder O1, O2 bzw. O3 in Verbindung. Die jeweils anderen Eingänge dieser ODER-Glieder sind mit Ausgängen des die Kennung beinhaltenden Registerteiles KSP verbunden. Die drei Binärstellen der Kennung haben folgende Bedeutung :

000    1 Eintrag
100    2 Einträge
110    4 Einträge
111    8 Einträge

Der in Fig. 5 dargestellte Zeitlagenvergleicher arbeitet in folgender Weise : Wenn die Kennung den Wert 000 hat, liefert das UND-Glied U1 dann und nur dann einen Vergleichsimpuls an die Ablaufsteuerung AS (Fig. 4), wenn der Zählstand des Zeitlagenzählers ZLZ in allen Binärstellen mit der in dem Registerteil STS-Adr eingeschriebenen Steuerspeicheradresse übereinstimmt. Falls die Kennung den Wert 100 hat, ist das der höchstwertigen Binärstelle zugeordnete Koinzidenz-Glied K9 unwirksam geschaltet, so daß unabhängig von dem in dem Register eingeschriebenen Wert (0 oder 1) jedesmal Koinzidenz simuliert wird, wenn der Zählstand des Zeitlagenzählers ZLZ in allen übrigen Binärstellen mit dem Registereintrag übereinstimmt. Dementsprechend werden in äquidistanten Zeitlagen zwei Vergleichsimpulse erzeugt, was zwei äquidistanten Steuerspeicheradressen entspricht. Wenn die Kennung den Wert 110 hat, werden sowohl das Koinzidenz-Glied K9 als auch das Koinzidenz-Glied K8 unwirksam geschaltet, so daß zu vier äquidistanten Zeitlagen Vergleichsimpulse VI (und damit Schreibimpulse SI) erzeugt werden. Entsprechend führt der Kennungswert 111 zur Erzeugung von acht zeitlich äquidistanten Vergleichs- bzw. Schreibimpulsen.

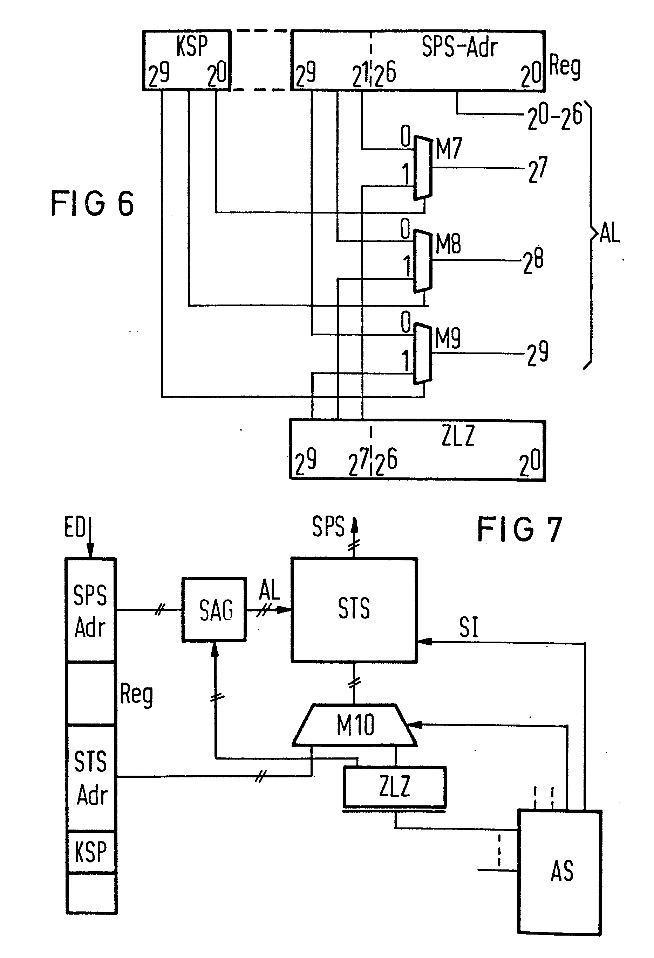

Fig. 6 zeigt ein Prinzipschaltbild zur Erzeugung der den unterschiedlichen Steuerspeicheradressen einer Mehrkanalverbindung entsprechenden (ebenfalls äquidistanten) Sprachspeicheradressen. Die Schaltung beinhaltet drei den höchstwertigen Binärstellen der Sprachspeicheradressen zugeordnete als 1 : 2-Multiplexer ausgebildete Umschalteeinrichtungen M7, M8 und M9. Diese Umschalteeinrichtungen sind durch die Ausgänge des die Kennung beinhaltenden Registerteiles KSP derart umsteuerbar, daß wahlweise entweder die betreffenden Ausgänge des Registerteiles SPS-Adr oder die gleichnamigen Ausgänge des Zeitlagenzählers ZLZ mit den entsprechenden Adern der zu dem Steuerspeicher STS führenden Adressenleitung AL verbunden sind. Dies hat zur Folge, daß in Abhängigkeit von der in dem Registerteil KSP gespeicherten Kennung eine, zwei oder drei der die Binärstellen mit den höchsten Stellenwerten repräsentierenden Adern der Adressenleitung AL gegebenenfalls durch Ausgangssignale des Zeitlagenzählers ZLZ beaufschlagt werden, so daß entsprechende äquidistante Sprachspeicheradressen zu den Dateneingängen des Steuerspeichers STS durchgeschaltet werden.

Fig. 7 zeigt das Prinzipschaltbild einer zweiten Varianten zur Ansteuerung des Steuerspeichers STS. Sie unterscheidet sich von der in Fig. 4 dargestellten Schaltung dadurch, daß auch die Steuerspeicheradressen — ähnlich wie die Sprachspeicheradressen bei der Schaltung nach Fig. 6 — mit Hilfe einer Umschalteeinrichtung M10 erzeugt werden. Die Umschalteeinrichtung M10 dient ferner zur Umschaltung der Adressen für den Einspeicher- und den Auslesezustand.

In allen beschriebenen Fällen werden die einer Mehrkanalverbindung entsprechenden Steuerspeicher- und Sprachspeicheradressen der die Mehrkanalverbindung zusammensetzenden Einzelkanäle aus einem einzigen vorgegebenen Adressenpaar selbsttätig abgeleitet, so daß die übergeordnete Steuereinrichtung auch zur Durchkopplung derartiger Mehrkanalverbindungen nur einem pro Verbindungsrichtung in Anspruch genommen wird.

## Ansprüche

1. Zeitlagenvielfach für ein Zeitmultiplexsystem zur Durchkopplung digitaler, insbesondere deltamodulierter Nachrichtensignale, die in Zeitkanälen unterschiedlich hoher Bitrate übertragen werden, wobei die Nachrichtensignale eines Zeitkanals höherer Bitrate (Mehrkanalverbindung) digitale Zeichenelemente bzw. Wörter umfassen, deren Zahl ein $2^n$-faches (n ganzzahlig) der Zahl der Zeichenelemente bzw. Wörter einer Grundbitrate (Einzelkanal) ist und die in entsprechender Vielzahl zeitlich äquidistant innerhalb jedes Pulsrahmens angeordnet sind,
— mit wenigstens einer Zubringer-Multiplexleitung (ZML) und wenigstens einer Abnehmer-Multiplexleitung (AML),
— mit einem Sprachspeicher (SPS), in welchen die auf der Zubringer-Multiplexleitung ankommenden Nachrichtensignale vorzugsweise zyklisch eingelesen werden, wobei die Nachrichtensignale eines Zeitkanals höherer Bitrate (Mehrkanalverbindung) eine dem genannten $2^n$-fachen entsprechende Zahl separater Speicherstellen des Sprachspeichers belegen,
— mit einem mittels eines Zeitlagenzählers (ZLZ) zyklisch adressierbaren Steuerspeicher (STS) zur Steuerung der zeitlichen Reihenfolge, mit der die Zeichenelemente bzw. Wörter aus dem Sprachspeicher an die Abnehmer-Multiplexleitung ausgelesen werden, wobei in dem Steuerspeicher Umteradressen, die für die Zeitlage eines Nachrichtensignals auf der Abnehmer-Multiplexleitung kennzeichnend sind, Sprachspeicheradressen eingeschrieben sind, welche für die Zeitlage desselben Nachrichtensignals auf der Zubringer-Multiplexleitung kennzeichnend sind oder umgekehrt,

— mit Adressenregistern (Reg), in denen von einer übergeordneten Steuereinrichtung Steuer- und Sprachspeicheradressen in einer gegenseitigen Zuordnung eingegeben sind, welche der Identität der miteinander zu koppelnden Zeitkanäle auf der Zubringer- und der Abnehmer-Multiplexleitung entspricht,

— wobei im Falle der Durchkopplung von Zeitkanälen höherer Bitrate (Mehrkanalverbindungen) lediglich die der Zeitlage jeweils eines der zeitlich äquidistanten Zeichenelemente bzw. Wörter auf der Zubringer-Multiplexleitung bzw. der Abnehmer-Multiplexleitung entsprechende Sprachspeicheradresse bzw. Steuerspeicheradresse eingegeben ist,

— sowie mit einer Speichereinrichtung zur Speicherung einer das genannte $2^n$-fache kennzeichnenden Information (Kennung), dadurch gekennzeichnet,

— daß die Ausgänge der Adressenregister (Reg), die denjenigen Binärstellen ($2^7$, $2^8$, $2^9$) der Steuerspeicher- bzw. Sprachspeicheradressen entsprechen, welche sich für die aufeinanderfolgenden Steuerspeicher- bzw. Sprachspeicheradressen eines gegebenen Zeitkanals höherer Bitrate (Mehrkanalverbindung) dem genannten $2^n$-fachen entsprechend ändern, einerseits und die denselben Binärstellen ($2^7$, $2^8$, $2^9$) entsprechenden Ausgänge des Zeitlagenzählers (ZLZ) andererseits mit Verknüpfungsgliedern (K7-O1, K8-O2, K9-O3 ; M7, M8, M9) verbunden sind

— und daß diese Verknüpfungsglieder (K1-O1, K8-O2, K9-O3 ; M7, M8, M9) über die Ausgänge der gennanten Speichereinrichtung (KSP) zur Speicherung der Kennung derart aktivierbar sind, daß bei der Einschreibung der Sprachspeicheradressen in den Steuerspeicher (STS) durch den sich zyklisch wiederholenden Ablauf des Zeitlagenzählers (ZLZ) nacheinander die nicht in die Adressenregister (Reg) eingegebenen Adressenbestandteile von Steuerspeicheradressen und Sprachspeicheradressen selbsttätig erzeugbar sind.

2. Zeitlagenvielfach nach Anspruch 1, mit einem Zeitlagenvergleicher, der eine der Zahl der Adressenbits der Steuerspeicheradressen entsprechende Zahl von Vergleicherelementen umfaßt, mittels dessen die Koinzidenz zwischen dem Speicherinhalt des die Steuerspeicheradresse beinhaltenden Adressenregisters und dem aktuellen Zählstand des Zeitlagenzählers ermittelbar ist und der im Koinzidenzfall die Erzeugung eines Schreibimpulses für den Steuerspeicher veranlaßt, dadurch gekennzeichnet, daß die Vergleicherelemente (K7, K8, K9) die denjenigen Binärstellen ($2^7$, $2^8$, $2^9$) der Steuerspeicheradressen zugeordnet sind, welche von der äquidistanten Adressenänderung betroffen sind, mit einem Eingang von jeweils einem ODER-Glied

(O1, O2, bzw. O3) verbunden sind, daß diese ODER-Glieder (O1, O2, O3) mit weiteren Eingängen an die Ausgänge der genannten Speichereinrichtung (KSP) zur Speicherung der Kennung angeschlossen sind, derart daß durch die Aktivierung von Ausgängen der Speichereinrichtung (KSP) in dem Zeitlagenvergleicher (ZLZ), Fig. 5) eine Aktivierung der betreffenden Vergleicherelemente (K7, K8 bzw. K9) simuliert und bei den entsprechenden äquidistanten Zählständen des Zeitlagenzählers (ZLZ) jeweils die Erzeugung eines Schreibimpulses veranlaßt wird.

3. Zeitlagenvielfach nach Anspruch 1 oder 2, dadurch gekennzeichnet, daß diejenigen Ausgänge des die Sprachspeicheradresse und/oder des die Steuerspeicheradresse beinhaltenden Teiles (SPS-Adr bzw. SPS-Adr) des Adressenregisters (Reg), die den von der äquidistanten Adressenänderung betroffenen Binärstellen ($2^7$, $2^8$, $2^9$) zugeordnet sind, mit ersten Eingängen von jeweils einer Umschalteeinrichtung (M7, M8, M9) verbunden sind, daß die zweiten Eingänge der Umschalteeinrichtungen (M7, M8, M9) mit den denselben Binärstellen entsprechenden Ausgängen des Zeitlagenzählers (ZLZ) verbunden sind, und daß die Umschalteeinrichtungen (M7, M8, M9) durch die genannte Speichereinrichtung (KSP) selektiv derart umsteuerbar sind, daß an den betreffenden Adressenausgangsleitungen (AL) alternativ die Ausgangssignale des Adressenregisters oder die Ausgangssignale der entsprechenden Zählstufen des Zeitlagenzählers (ZLZ) anstehen.

**Claims**

1. Time slot multiple for a t.d.m.    m for switching through digital, in particular    a-modulated communications signals which    ﹐ transmitted in time channels possessing different bit rates, wherein the communications signals of a time channel having a higher bit rate (multichannel connection) comprise digital character elements or words, the number of which is $2^n$ times (n = a whole number) the number of character elements or words of a base bit rate (individual channel) and which are arranged in an appropriate number and so as to be equidistant in time within each pulse frame,

— comprising at least one incoming multiplex line (ZML) and at least one outgoing multiplex line (AML),

— with a speech store (SPS) into w    the communications signals incoming on th    ﹐m-ing multiplex line are input preferably    lly, where the communications signals c    ﹐e channel which has a higher bit rate (m    ﹐annel connection) occupy a number of    ﹐parate storage positions of the speech store corresponding to the aforementioned $2^n$ times,

— with a control store (STS) which can be cyclically addressed by means of a time slot counter (ZLZ) and which serves to control the time sequence in which the character elements or words are read out from the speech store to the outgoing multiplex line, where speech store addresses which characterise the time slot of a communications signal on the incoming multiplex line are input under addresses which characterise the time slot of the same communications signal on the outgoing multiplex line, or vice versa,

— with address registers (Reg) into which control- and speech-store addresses are input from a superordinate control device in a mutual assignment which corresponds to the identity of the time channels which are to be coupled to one another on the incoming and outgoing multiplex line,

— where in the event that time channels having the higher bit rate are to be switched through (multi-channel connections) only the speech store address or control store address is input which corresponds to the time slot of one of the time-equidistant character elements or words on the incoming multiplex line or the outgoing multiplex line respectively,

— and with a storage device which serves to store an item of information (code) characterising the aforementioned $2^n$ multiple, characterised in that

— on the one hand, the outputs of the address registers (Reg) which correspond to those binary digits ($2^7$, $2^8$, $2^9$) of the control store- or speech store addresses which undergo change for the consecutive control store- and speech store-addresses of a given time channel having a higher bit rate (multi-channel connection) in accordance with the aforementioned $2^n$ multiple and, on the other hand, the outputs of the time slot counter (ZLZ) which corresponds to the same binary digits (27, 28, 29) are connected to logic linking elements (K7-O1, K8-O2, K9-O3 ; M7, M8, M9)

— and that these logic linking elements (K7-O1, K8-O2, K9-O3 ; M7, M8, M9) may be activated via the outputs of the aforementioned storage device (KSP) which serves to store the code, in such manner that when the speech store addresses are input into the control store (STS) as a result of the cyclically repetitive functioning of the time slot counter (ZLZ) those address components of control store addresses and speech store addresses which have not been input into the address registers (Reg) are automatically generated in turn.

2. Time slot multiple as claimed in claim 1, comprising a time slot comparator which contains a number of comparator elements corresponding to the number of address bits in the control store addresses, by means of which it is possible to determine the coincidence between the store contents of the address register which contains the control store address and the current count of the time slot counter and which in the event of coincidence causes an input pulse to be generated for the control store, characterised in that the comparator elements (K7, K8, K9) which are assigned to those binary digits ($2^7$, $2^8$, $2^9$) of the control store addresses which are affected by the equidistant address change are each connected to an input of an OR gate (O1, O2, O3), that these OR gates (O1, O2, O3) are connected by further inputs to the outputs of the aforementioned storage device (KSP) which serves to store the code, in such manner that as a result of the activation of outputs of the storage device (KSP) in the time slot comparator (ZLZ, Fig. 5) activation of the relevant comparator elements (K7, K8, K9) is simulated and an input pulse is generated at the corresponding equidistant counts of the time slot counter (ZLZ).

3. Time slot multiple as claimed in claim 1 or 2, characterised in that those outputs of the component (SPS-Adr or SPS-Adr) of the address register (Reg) which contains the speech store address or which contains the control store address, which are assigned to the binary digits ($2^7$, $2^8$, $2^9$) which are affected by the equidistant address change are connected to first inputs of a switching device (M7, M8, M9), that the second inputs of the switching devices (M7, M8, M9) are connected to those outputs of the time slot counter (ZLZ) which correspond to the same binary digits, and that the switching devices (M7, M8, M9) may be selectively reversed by the aforementioned storage device (KSP) in such manner that alternately the output signals of the address register or the output signals of the corresponding counting stages of the time slot counter (ZLZ) appear on the relevant address output lines (AL).

**Revendications**

1. Multiplex de positions temporelles pour un dispositif de multiplexage par répartition dans le temps pour la commutation de signaux d'information numériques, notamment à modulation delta, qui sont transmis dans des canaux temporels présentant des débits binaires de valeurs différentes, les signaux d'information d'un canal temporel de débit binaire plus élevé (liaison à plusieurs canaux) comprenant des éléments de signaux ou mots numériques dont le nombre est égal à $2^n$ fois (n étant un nombre entier) le nombre des éléments de signaux ou mots d'un débit binaire de base (canal individuel), et le nombre plus important correspondant d'éléments de signaux ou de mots étant disposé de façon équidistante dans le temps à l'intérieur de chaque trame d'impulsions,

— comportant au moins une ligne multiplex d'amenée (ZML) et au moins une ligne multiplex d'usagers (AML),

— comportant une mémoire pour la parole (SPS), dans laquelle sont mémorisés, de préférence cycliquement, les signaux d'information provenant de la ligne multiplex d'amenée, les signaux d'information d'un canal temporel de débit binaire plus élevé (liaison à plusieurs canaux) occupant un nombre d'emplacements de mémorisation distincts, correspondant auxdites $2^n$ fois, de la mémoire pour la parole

— comportant une mémoire de commande (STS), pouvant être adressée cycliquement au moyen d'un compteur de positions temporelles (ZLZ), pour la commande de la séquence temporelle avec laquelle les éléments de signaux ou mots sont lus à partir de la mémoire pour la parole au niveau de la ligne multiplex d'usagers, et la mémoire de commande contenant, à des adresses qui sont caractéristiques pour la position temporelle d'un signal d'information sur la ligne multiplex d'usagers, des adresses de mémoire pour la parole qui sont caractéristiques pour la position temporelle du même signal d'information sur la ligne multiplex d'amenée, ou inversement,

— comportant des registres d'adresses (Reg) dans lesquels un dispositif de commande d'ordre supérieur inscrit des adresses de mémoire de commande et de mémoire pour la parole suivant une association mutuelle qui correspond à l'identité des canaux temporels devant être couplés l'un à l'autre sur la ligne multiplexe d'amenée et sur la ligne multiplex d'usagers.

— dans le cas de la commutation de canaux temporels de débit binaire plus élevé (liaison à plusieurs canaux), seule l'adresse de la mémoire pour la parole ou l'adresse de la mémoire de commande qui correspond à la position temporelle respective d'un des éléments de signaux ou mots équidistants dans le temps sur la ligne multiplex d'amenée ou la ligne multiplex d'usagers, étant inscrite,

— et comportant également un dispositif de mémoire pour la mémorisation d'une information caractérisant lesdites $2^n$ fois (identification caractéristique),
caractérisé par le fait

— que les sorties du registre d'adresses (Reg) qui correspondent aux positions binaires ($2^7$, $2^8$, $2^9$) des adresses de la mémoire de commande ou de la mémoire pour la parole qui sont modifiées, en correspondance avec lesdites $2^n$ fois, pour les adresses successives de la mémoire de commande ou de la mémoire pour la parole d'un canal temporel donné de débit binaire plus important (liaison à plusieurs canaux), d'une part, et les sorties du compteur de positions temporelles (ZLZ) qui correspondent aux mêmes positions binaires ($2^7$, $2^8$, $2^9$), d'autre part, sont couplées à des circuits de combinaison (K7-O1, K8-O2, K9-O3 ; M7, M8, M9)

— et que ces éléments de combinaison (K7-O1, K8-O2, K9-O3 ; M7, M8, M9) sont activés, par l'intermédiaire des sorties dudit dispositif de mémoire (KSP) pour la mémorisation de l'identification caractéristique, de manière que lors de l'inscription des adresses de la mémoire pour la parole dans la mémoire de commande (STS), les parties des adresses de la mémoire de commande et des adresses de la mémoire pour la parole qui ne sont pas inscrites dans le registre d'adresses (Reg) peuvent être produites automatiquement les unes à la suite des autres, par le déroulement de la séquence, se répétant cycliquement, du compteur de positions temporelles (ZLZ).

2. Multiplex positions temporelles suivant la revendication 1, comportant un comparateur de positions temporelles, qui comprend un nombre d'éléments de comparaison qui correspond au nombre de bits des adresses de la mémoire de commande, au moyen duquel peut être détectée la coïncidence entre le contenu de mémorisation du registre d'adresses contenant les adresses de la mémoire de commande et l'état de comptage réel du compteur de positions temporelles, et qui provoque, en cas de coïncidence, la production d'une impulsion d'écriture pour la mémoire de commande, caractérisé par le fait que les éléments de comparaison (K7, K8, K9) qui sont associés aux positions binaires ($2^7$, $2^8$, $2^9$) des adresses de la mémoire de commande, qui sont concernées par la modification d'adresses équidistantes, sont reliés à une entrée d'un circuit OU respectif (O1, O2 ou O3), que d'autres entrées de ces circuits OU (O1, O2, O3) sont reliées aux sorties dudit dispositif de mémoire (KSP) pour la mémorisation de l'identification caractéristique de manière que l'activation de sorties du dispositif de mémoire (KSP) simule une activation des éléments de comparaison concernés (K7, K8 ou K9) dans le comparateur de positions temporelles (ZLZ, figure 5), et provoque respectivement la production d'une impulsion d'écriture pour les états de comptage équidistants correspondants du compteur de positions temporelles (ZLZ).

3. Multiplex de positions temporelles suivant la revendication 1 ou 2, caractérisé par le fait que les sorties de la zone (SPS-Adr ou SPS-Adr) du registre d'adresses (Reg), contenant l'adresse de la mémoire pour la parole et/ou l'adresse de la mémoire de commande, qui sont associées aux positions binaires ($2^7$, $2^8$, $2^9$) concernées par la modification d'adresses équidistantes, sont reliées à des premières entrées d'un circuit de commutation respectif (M7, M8, M9), que les secondes entrées des circuits de commutation (M7, M8, M9) sont reliées aux sorties du compteur de positions temporelles (ZLZ) qui correspondent aux mêmes positions binaires, et que les dispositifs de commutation (M7, M8, M9) peuvent être commutés sélectivement, par ledit dispositif de mémoire (KSP), de manière qu'il apparaisse alternativement sur les lignes de sortie d'adresses concernées (AL) les signaux de sortie du registre d'adresses ou les signaux de sortie des étages correspondant du compteur de positions temporelles (ZLZ).

# FIG 1

# FIG 2

# FIG 3

L0 | Zs0 | 8 Kbit/s

L1 | Zs1 | 33 | 16 Kbit/s

L2 | Zs2 | 18 | 34 | 50 | 32 Kbit/s

L3 | Zs3 | 11 | 19 | 27 | 35 | 43 | 51 | 59 | 64 Kbit/s

Zs 3 L3 — 51
Zs 2 L2 — 34
Zs 1 L1 — 17
Zs 0 L0 — 0

Zs 11 L3 — 179

Zs 19 L3 — 307
Zs 18 L2 — 290

Zs 27 L3 — 435

Zs 35 L3 — 563
Zs 34 L2 — 546
Zs 33 L1 — 529

Zs 43 L3 — 691

Zs 51 L3 — 819
Zs 50 L2 — 802

Zs 59 L3 — 947

0 024 708

# FIG 4

# FIG 5

FIG 6

FIG 7